# EUROPEAN PATENT SPECIFICATION

(11) **EP 3 396 553 B1**
(45) Date of publication and mention of the grant of the patent: **10.03.2021**
(21) Application number: 16877639.1
(22) Date of filing: 14.12.2016
(51) Int. Cl.: G06F 11/14

(54) **METHOD AND DEVICE FOR PROCESSING DATA AFTER RESTART OF NODE**
VERFAHREN UND VORRICHTUNG ZUM VERARBEITEN VON DATEN NACH DEM NEUSTART DES KNOTENS
PROCÉDÉ ET DISPOSITIF DE TRAITEMENT DE DONNÉES APRÈS REDÉMARRAGE DE NOEUD

(30) Priority: 23.12.2015 CN 201510977774
(43) Date of publication of application: 31.10.2018
(73) Proprietor: Alibaba Group Holding Limited, Grand Cayman (KY)
(72) Inventor: LI, Zhuoling, Hangzhou Zhejiang 311121 (CN); XIONG, Qi, Hangzhou Zhejiang 311121 (CN); HAN, Sen, Hangzhou Zhejiang 311121 (CN); LI, Julei, Hangzhou Zhejiang 311121 (CN)
(74) Representative: Barker Brettell LLP
(86) International application number: PCT/CN2016/109953
(87) International publication number: WO 2017/107828

(56) References cited:
- CN-A- 102 467 418
- CN-A- 102 467 418
- CN-A- 103 019 889
- CN-A- 103 595 651
- CN-A- 104 794 015
- JP-A- 2004 086 543
- US-A1- 2013 117 233
- US-B1- 8 959 530

## Description

### TECHNICAL FIELD

The present disclosure relates to the field of communication technologies, and, more particularly, to a method for processing data after a restart of a node. The present disclosure also relates to a data processing device.

### BACKGROUND

With the continuous development of Internet technologies, cloud computing platforms, also referred to as cloud platforms, have gained more and more attention. Cloud platforms may be classified into three categories according to functions: storage cloud platforms mainly for data storage, computing cloud platforms mainly for data processing, and comprehensive cloud computing platforms for both computing and data storage processing. A cloud platform allows a developer to either run a written program in the cloud, or use a service provided in the cloud, or both.

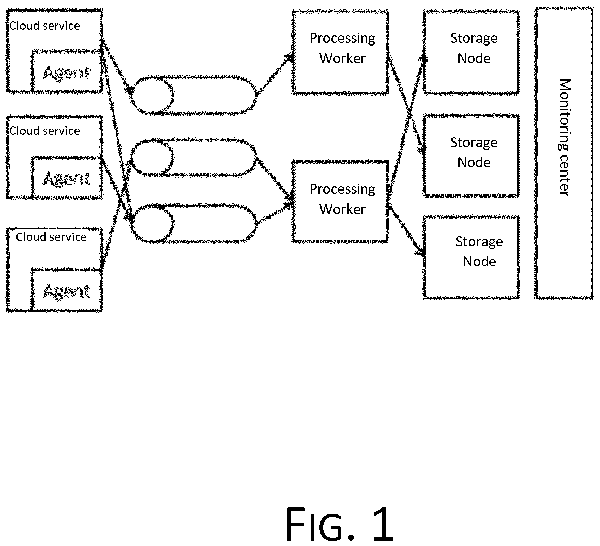

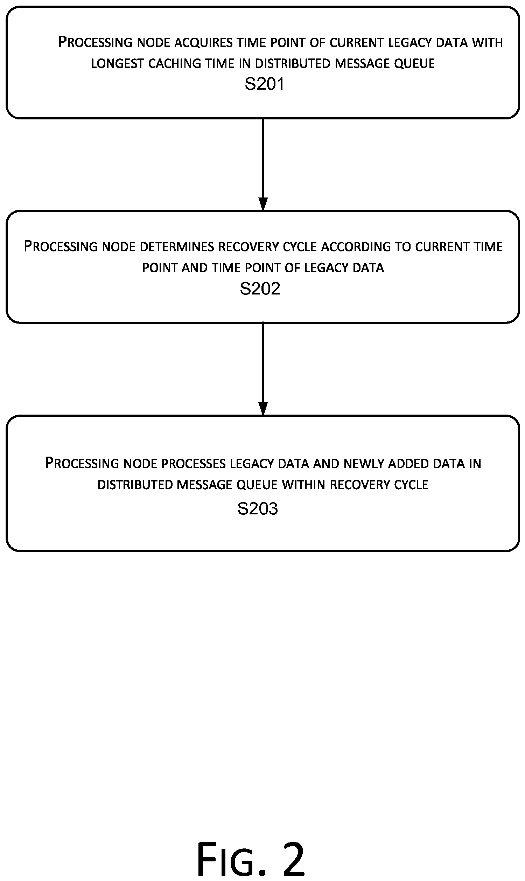

FIG. 1 is a schematic diagram of an architectural design of a real-time monitoring service of a cloud platform according to conventional techniques. The architectural design of a cloud platform log service is usually divided into five layers: a (log) collection layer, a (log) transport layer, a processing layer, a storage layer, and a monitoring center. The collection layer is responsible for reading users' various logs, and then sending the logs that need to be stored to the transport layer. In the schematic architectural diagram of the log service of the cloud platform according to conventional techniques shown in FIG. 1, the function of the layer is implemented by various agents in combination with existing cloud service functions. The agents are deployed on physical machines or virtual machines at all levels to read the users' logs by rule and send the logs. The processing layer is generally composed of multiple scalable worker nodes (processing workers in FIG. 2), and is responsible for receiving the logs from the transport layer, processing the logs and storing the logs into various storage devices. A processing worker is essentially a system process, which is stateless and may be scaled horizontally. Whether the order of logs may be ensured is closely related to the logic of the processing layer. The storage layer is responsible for data storage, and may be a physical disk, or a virtual disk provided by a distributed file system. The transport layer is located between the collection layer and the processing layer, and is responsible for ensuring that the logs are sent to the processing layer. The transport layer is generally implemented by message queues that provide redundancy and may be implemented with heaps, and serves as a bridge between the collection layer and the processing layer. The storage layer is responsible for data storage. The monitoring center includes an access layer. The access layer is provided with a dedicated access API, for providing unified data access interfaces externally.

The real-time monitoring service has a higher requirement on the real-time performance, and generally, requires the monitoring delay to be less than 5 minutes, one piece of monitoring data per minute. Under such a high real-time requirement, how to prevent data loss and duplication (at least to ensure that the monitoring curve is not too shaky and does not have any lost points) as much as possible during a system restart is a technical problem. The most critical issue is a restart policy of a stateful node, that is, the restart of a processing node in a real-time computing system.

In order to avoid the jitter problem of the monitoring curve caused by node restart, the conventional techniques mainly adopt the following three methods:

### (1) Data replay

This method replays the data in the first few minutes of the message queue during the restart, ensuring that the data is not lost.

### (2) Persistent intermediate state

This method periodically saves a statistics state to a persistent database and restores to the state during the restart.

### (3) Simultaneous processing of two pieces of data

This method runs two real-time computing tasks at the same time according to the characteristic that the message queue supports multiple consumers. When one real-time computing task is restarted, data of the other real-time computing task is used, and then the method switches back to the restarted computing task after the restart.

However, in the process of implementing the present disclosure, the inventors find that the conventional techniques have the following disadvantages.
(1) Data replay easily leads to data duplication and depends on a message queue. Data processing often involves multiple data storage procedures, for example, it needs to update mysql metadata and store raw data to hadoop. In this case, data replay is likely to result in duplication of some of the stored data. Moreover, data replay depends on the replay function of the message queue, such as Kafka, while ONS does not support that.
(2) The persistent intermediate state is not suitable for scaling and upgrade, and is logically complex. Under many circumstances, a system restart is implemented for scaling or system upgrade, and the data that each processing node is responsible for will change after scaling, and becomes inconsistent with the original intermediate state. An upgrade may also result in an inconsistency between the intermediate states. Moreover, the logic of persistence and recovery is relatively complex when computing is complex, with many intermediate states.
(3) Processing two pieces of data at the same time has excessive costs and requires more computing resources and storage resources. A larger amount of data processed will cause a greater waste.

It is thus clear that how to avoid, as much as possible, the lagging problem of data processing caused by a node restart while reducing the consumption of hardware resources is an urgent technical problem to be solved by those skilled in the art.

CN102467418 discloses a real-time data transmission error recovering method, device and system, which is applicable to the field of data processing. The method comprises the steps of: the total data quantity transmitted by a data transmission passage is configured; and after real-time equipment outputs data with the configured data quantity in each time, the real-time data transmission error recovering device requests the data transmission passage to finish the transmission of the data quantity requested by the real-time equipment.

### SUMMARY

The present disclosure provides a method for processing data after a restart of a node, to avoid the lagging problem of data processing caused by a node restart while reducing the costs for hardware modification. The method is applied to a data processing system that includes a distributed message queue and a processing node, and includes the following steps:
acquiring, by the processing node, a time point of current legacy data with the longest caching time in the distributed message queue after a restart of the processing node has completed;
determining, by the processing node, a recovery cycle according to a current time point and the time point of the legacy data, wherein the recovery cycle is determined by: acquiring a time length from the time point of legacy data currently with longest caching time and the current time point, and generating the recovery cycle having a time length consistent with the time length; and
processing, by the processing node, the legacy data and newly added data in the distributed message queue within the recovery cycle.

Preferably, the data processing system further includes a storage node, and before the restart of the processing node has completed, the method further includes:
receiving, by the processing node, an instruction of closing a computing task; and stopping, by the processing node, receiving data from the distributed message queue, and
writing data currently cached in the processing node into the storage node upon completion of the processing of the data.

Preferably, the step of determining, by the processing node, a recovery cycle according to a current time point and the time point of the legacy data specifically includes:
acquiring a time length from the time point corresponding to the legacy data with the longest caching time to the current time point; and
generating the recovery cycle having a time length consistent with the time length.

Preferably, the step of processing, by the processing node, the legacy data and newly added data in the distributed message queue within the recovery cycle specifically includes:
setting multiple processing time periods sequentially according to the unit time length of the recovery cycle, and allocating to-be-processed data to each of the processing time periods based on the legacy data and the newly added data; and
processing the corresponding to-be-processed data within each of the processing time periods, and recovering the computing task to normal processing logic after the recovery cycle ends.

Preferably, the processing time period is composed of data processing time and data synchronization time in sequence, and the step of processing the corresponding to-be-processed data within each of the processing time periods specifically includes:
processing the to-be-processed data within the data processing time, and storing the to-be-processed data that has been processed after the data processing time ends; and
discarding the to-be-processed data that has not been processed within the data synchronization time if the to-be-processed data that has not been processed exists after the data processing time ends.

Correspondingly, the present disclosure further provides a data processing device, applied as a processing node to a data processing system that includes a distributed message queue and the processing node. The data processing device includes:
an acquisition module configured to acquire a time point of current legacy data with the longest caching time in the distributed message queue after a restart has completed;
a determination module configured to determine a recovery cycle according to a current time point and the time point of the legacy data, wherein the recovery cycle is determined by: acquiring a time length from the time point of legacy data currently with longest caching time and the current time point, and generating the recovery cycle having a time length consistent with the time length; and
a processing module configured to process the legacy data and newly added data in the distributed message queue within the recovery cycle.

Preferably, the data processing system further includes a storage node, and the data processing device further includes:
a closing module configured to receive an instruction of closing a computing task, stop receiving data from the distributed message queue, and write data currently cached in the data processing device into the storage node upon completion of the processing of the data.

Preferably, the determination module specifically includes:
an acquisition submodule configured to acquire a time length from the time point corresponding to the legacy data with the longest caching time to the current time point; and
a generation submodule configured to generate the recovery cycle having a time length consistent with the time length.

Preferably, the processing module specifically includes:
a setting submodule configured to set multiple processing time periods sequentially according to the unit time length of the recovery cycle, and allocate to-be-processed data to each of the processing time periods based on the legacy data and the newly added data;
a processing submodule configured to process the corresponding to-be-processed data within each of the processing time periods; and
a recovery submodule configured to recover the computing task to normal processing logic after the recovery cycle ends.

Preferably, the processing time period is composed of data processing time and data synchronization time in sequence, and the processing submodule is specifically configured to:
process the to-be-processed data within the data processing time, and store the to-be-processed data that has been processed after the data processing time ends; and
discard the to-be-processed data that has not been processed within the data synchronization time if the to-be-processed data that has not been processed exists after the data processing time ends.

The present disclosure also provides one or more memories storing thereon computer-readable instructions that, when executed by one or more processors, cause the one or more processors to perform acts comprising:
acquiring a time point of legacy data with longest caching time in a distributed message queue after a restart of the processing node has completed;
determining a recovery cycle according to a current time point and the time point of the legacy data, wherein the recovery cycle is determined by: acquiring a time length from the time point of legacy data currently with longest caching time and the current time point, and generating the recovery cycle having a time length consistent with the time length; and
processing the legacy data and newly added data in a distributed message queue within the recovery cycle.

As shown from the technical solution of the present disclosure, the processing node acquires a time point of current legacy data with the longest caching time in a distributed message queue after a restart of the processing node has completed, determines a recovery cycle according to a current time point and the time point of the legacy data, and processes the legacy data and newly added data in the distributed message queue within the recovery cycle. Thus, an interruption of data processing resulting from a restart may be avoided, an impact on the user's feeling may be eliminated, and user experience is improved.

### BRIEF DESCRIPTION OF THE DRAWINGS

FIG. 1 is a schematic architectural diagram of a real-time monitoring service of a cloud platform in the conventional techniques;
FIG. 2 is a flowchart of a method for processing data after a restart of a node according to the present disclosure;
FIG. 3 is a schematic diagram of processing data within a recovery cycle according to a specific example embodiment of the present disclosure; and

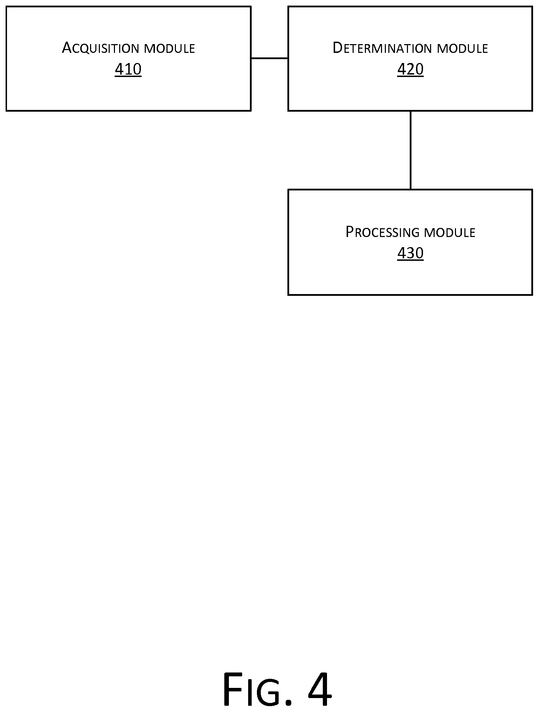

FIG. 4 is a schematic structural diagram of a data processing device according to the present disclosure.

### DETAILED DESCRIPTION

In view of the problems in the conventional techniques, the present disclosure provides a method for processing data after a restart of a node. The method is applied to a data processing system that includes a distributed message queue and a processing node, to avoid the problem that the user's feeling is affected by an interruption of data processing caused when the processing node in the data processing system is restarted for some reason. It should be noted that the data processing system may be a real-time monitoring system in the conventional techniques or a user log recording system. On this basis, those skilled in the art may also apply the solution of the present disclosure to other systems that have a real-time processing requirement on data, and such applications shall also belong to the protection scope of the present disclosure.

As shown in FIG. 2, the method includes the following steps.

S201. The processing node acquires a time point of current legacy data with the longest caching time in the distributed message queue after a restart of the processing node has completed.

In a current data processing system for processing data in real time, a processing node often needs to be restarted because of the device itself or human causes. As a processing node is usually a single data processing device or a logical sum of multiple data processing devices, the processing node often cannot timely take data from the distributed message queue connected therewith during the restart, which causes the legacy of to-be-processed data in the message queue. Therefore, when the restart of the processing node is completed, how much time the restart process takes may be determined by comparing the time point of the earliest data in the message queue with the current time point. It should be noted here that the time point of the legacy data with the longest caching time in this step may be set to the time point at which the cached data is generated, or may be set to the time point at which the processing node should acquire the cached data. Setting different time points for different situations on the premise that the processing node may determine the restart duration belongs to the protection scope of the present disclosure.

In addition, there is often a period of time from the processing node's stopping acquiring the data from the message queue to formal restart, during which the processing node itself still caches some data that has been acquired from the message queue previously. Thus, in order to ensure that the processing node may automatically save the data cached in the processing node without loss in the case of timeout while closing the data receiving function, in a preferred example embodiment of the present disclosure, after receiving an instruction of closing a computing task (the instruction may be sent automatically by the system according to the state of the processing node or sent manually), the processing node, on one hand, stops receiving data from the distributed message queue, and on the other hand, writes data currently cached in the processing node into the storage node in the current data processing system upon completion of the processing of the data, to achieve automatic saving of the cached data.

In a specific example embodiment of the present disclosure, first, a close instruction is sent to a real-time computing task of the processing node through the system. The computing task enters a closed state after receiving the instruction, and stops receiving the message from the message queue. The processing node continues to process the cached data, then waits for timeout of a computing result and automatically writes the data into a storage service. Real-time computing means processing in a situation where there is no new data for a period of time, and a mechanism of automatically saving a computing result when a time window is exceeded will exist. Therefore, the processed data may be persistent through this step, which thus does not require saving and recovery of the intermediate state.

S202. The processing node determines a recovery cycle according to a current time point and the time point of the legacy data.

Based on the time point of the legacy data in S201, in a preferred example embodiment of the present disclosure, a time length from the time point corresponding to the legacy data with the longest caching time to the current time point is acquired, and the recovery cycle having a time length consistent with the time length is generated.

For example, after the task of the processing node is restarted, the processing node will compare a difference between the data time in the message queue and the system time, and set a data recovery cycle. For example, if the data time is 12:02:10 and the current time is 12:04:08, it indicates that it takes about 2 minutes to close the task and initialize the task during start, and data processing in the two minutes needs to be caught up. A recovery cycle of, e.g., 2 minutes, may be set after the data size and the processing capability are balanced. The time consumed by turning off and starting the task and the time for catching up data should be within 5 minutes; otherwise, the data delay will exceed 5 minutes.

S203. The processing node processes the legacy data and newly added data in the distributed message queue within the recovery cycle.

After the recovery cycle is determined, the processing node needs to process two batches of data at the same time within the cycle subsequently. One is the legacy data in the message queue, and the other is newly added data in the message queue within the cycle. In order to processing the two batches of data in an orderly manner, in a preferred example embodiment of the present disclosure, multiple processing time periods may be sequentially set according to the unit time length of the recovery cycle first, and then to-be-processed data is allocated to each of the processing time periods based on the legacy data and the newly added data. In this process, the legacy data and the newly added data may be mixed together to be evenly distributed to the processing time periods, or may be allocated separately for different processing time periods according to categories. Both the two implementations belong to the protection scope of the present disclosure.

After the corresponding to-be-processed data is allocated to each of the processing time periods, in this example embodiment, the corresponding to-be-processed data may be processed within each of the processing time periods, and the computing task may be recovered to normal processing logic after the recovery cycle ends. Thus, seamless connection of data processing after the processing node is restarted is completed.

Further, in order to enable the processing node to efficiently complete data processing within each processing time period, in a preferred example embodiment of the present disclosure, the processing time periods are divided into data processing time and data synchronization time, and the two are formed in sequence (data processing time - data synchronization time). When the corresponding to-be-processed data is processed within each of the processing time periods, the to-be-processed data is processed within the data processing time first, and the to-be-processed data that has been processed is stored after the data processing time ends. Then, the to-be-processed data that has not been processed is discarded within the data synchronization time if the to-be-processed data that has not been processed exists after the data processing time ends.

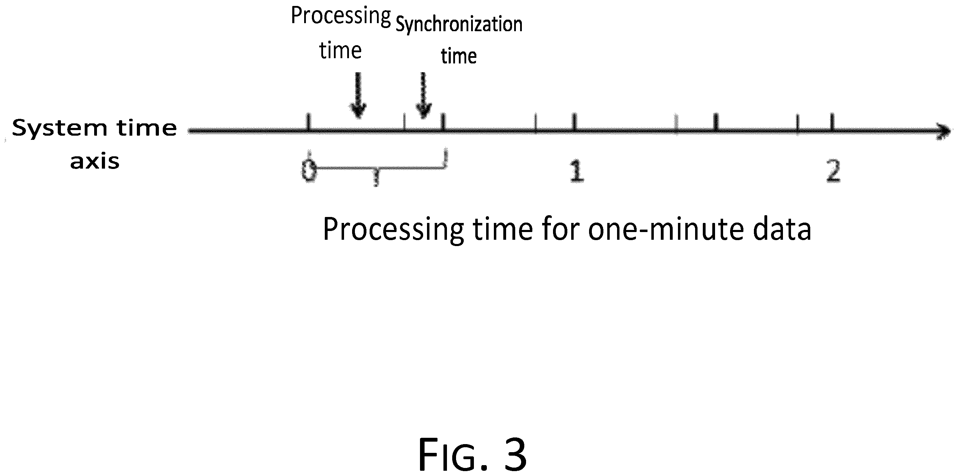

By using the data in the specific example embodiment in S202 and the schematic diagram of data processing shown in FIG. 3 as an example, in this step, the processing node needs to catch up 4-minute data within 2 minutes. Therefore, in the specific example embodiment, 2 minutes is equally divided into four parts, and each part is then divided into data processing time and synchronization time according to a ratio. The data in the corresponding minute is processed within the processing time and the result is stored. Data in the current minute is quickly discarded within the synchronization time, and the processing node is synchronized to the processing in the next minute.

Based on a series of operations before and after the restart of the processing node, an impact on the user's feeling that may be caused by an interruption of data processing resulting from the node restart is avoided, and user experience is improved.

From the description of the implementations above, those skilled in the art may clearly understand that the present invention may be implemented by hardware, or may be implemented by software plus a necessary universal hardware platform. Based on such understanding, the technical solutions of the present invention may be implemented in the form of a software product. The software product may be stored in a non-volatile storage medium (which may be a CD-ROM, a USB flash disk, a removable hard disk, or the like), and includes several instructions for instructing a computer device (which may be a personal computer, a server, a network device, or the like) to perform the methods described in various implementation scenarios of the present invention.

Those skilled in the art may understand that the accompanying drawings are merely schematic diagrams of a preferred implementation scenario, and modules or procedures in the accompanying drawings are not necessarily mandatory to implement the present invention.

Those skilled in the art may understand that modules in an apparatus in an implementation scenario may be distributed in the apparatus in the implementation scenario according to the description of the implementation scenario, or may be correspondingly changed and located in one or more apparatuses different from that in the implementation scenario. The modules in the implementation scenario may be combined into one module, or may be further divided into a plurality of submodules.

The sequence numbers of the present invention are merely for the convenience of description, and do not imply the preference among the implementation scenarios.

The above disclosures are merely several specific implementation scenarios of the present invention, but the present invention is not limited thereto. Any change that those skilled in the art may conceive of shall fall within the protection scope of the present invention.

## Claims

1. A method for processing data after a restart of a node, the method comprising:
acquiring (s101), by the processing node, a time point of legacy data currently with longest caching time in the distributed message queue after a restart of the processing node has completed;
determining (S102), by the processing node, a recovery cycle according to a current time point and the time point of the legacy data, wherein the recovery cycle is determined by: acquiring a time length from the time point of legacy data currently with longest caching time and the current time point, and generating the recovery cycle having a time length consistent with the time length; and
processing (S103), by the processing node, the legacy data and newly added data in the distributed message queue within the recovery cycle.

2. The method of claim 1, wherein the method is applied to a data processing system that includes the distributed message queue and the processing node.

3. The method of claim 2, wherein the data processing system further includes a storage node.

4. The method of any preceding claim, wherein the data processing system further comprises a storage node, and before the restart of the processing node has completed, the method further comprises:
receiving, by the processing node, an instruction of closing a computing task; and
stopping, by the processing node, receiving data from the distributed message queue, and writing data currently cached in the processing node into the storage node upon completion of the processing (S103) of the data.

5. The method of any preceding claim, wherein the determining (S102), by the processing node, the recovery cycle according to the current time point and the time point of the legacy data includes:
acquiring a time length from the time point corresponding to the legacy data with the longest caching time to the current time point; and
generating the recovery cycle having a time length consistent with the time length.

6. The method of claim 5, wherein the time length of the recovery cycle is same as the time length from the time point corresponding to the legacy data with the longest caching time to the current time point.

7. The method of any preceding claim, wherein the processing (S103), by the processing node, the legacy data and the newly added data in the distributed message queue within the recovery cycle includes:
setting multiple processing time periods sequentially according to a unit time length of the recovery cycle, and allocating to-be-processed data to each of the processing time periods based on the legacy data and the newly added data; and
processing the corresponding to-be-processed data within each of the processing time periods, and recovering the computing task to normal processing logic after the recovery cycle ends.

8. The method of claim 7, wherein the processing time period is composed of data processing time and data synchronization time in sequence, and the processing the corresponding to-be-processed data within each of the processing time periods includes:
processing the to-be-processed data within the data processing time, and storing the to-be-processed data that has been processed after the data processing time ends; and
discarding, within the data synchronization time, the to-be-processed data that has not been processed if the to-be-processed data that has not been processed exists after the data processing time ends.

9. A data processing device, applied as a processing node to a data processing system that comprises a distributed message queue and the processing node, the data processing device comprising:
an acquisition module (410) configured to acquire a time point of legacy data currently with longest caching time in the distributed message queue after a restart has completed;
a determination module (420) configured to determine a recovery cycle according to a current time point and the time point of the legacy data, wherein the recovery cycle is determined by: acquiring a time length from the time point of legacy data currently with longest caching time and the current time point, and generating the recovery cycle having a time length consistent with the time length; and
a processing module (430) configured to process the legacy data and newly added data in the distributed message queue within the recovery cycle.

10. The data processing device of claim 9, wherein the data processing system further comprises a storage node, and the data processing device further comprises:
a closing module configured to receive an instruction of closing a computing task, stop receiving data from the distributed message queue, and write data currently cached in the data processing device into the storage node upon completion of the processing of the data.

11. The data processing device of claim 9 or claim 10, wherein the determination module (420) further comprises:
an acquisition submodule configured to acquire a time length from the time point corresponding to the legacy data with the longest caching time to the current time point; and
a generation submodule configured to generate the recovery cycle having a time length consistent with the time length.

12. The data processing device of any one of claims 9 to 11, wherein the processing module (430) further comprises:
a setting submodule configured to set multiple processing time periods sequentially according to a unit time length of the recovery cycle, and allocate to-be-processed data to each of the processing time periods based on the legacy data and the newly added data;
a processing submodule configured to process the corresponding to-be-processed data within each of the processing time periods; and
a recovery submodule configured to recover the computing task to normal processing logic after the recovery cycle ends.

13. The data processing device of claim 12, wherein the processing time period is composed of data processing time and data synchronization time in sequence, and the processing submodule is configured to:
process the to-be-processed data within the data processing time, and store the to-be-processed data that has been processed after the data processing time ends; and
discard, within the data synchronization time, the to-be-processed data that has not been processed if the to-be-processed data that has not been processed exists after the data processing time ends.

14. One or more memories storing thereon computer-readable instructions that, when executed by one or more processors, cause the one or more processors to perform acts comprising:
acquiring a time point of legacy data with longest caching time in a distributed message queue after a restart of the processing node has completed;
determining a recovery cycle according to a current time point and the time point of the legacy data, wherein the recovery cycle is determined by: acquiring a time length from the time point of legacy data currently with longest caching time and the current time point, and generating the recovery cycle having a time length consistent with the time length; and
processing the legacy data and newly added data in a distributed message queue within the recovery cycle.

15. The one or more memories of claim 14, wherein the acts further comprise:
receiving an instruction of closing a computing task;
stopping receiving data from the distributed message queue; and
writing data currently cached in the processing node into a storage node upon completion of processing of the data.

## Patentansprüche

1. Verfahren zum Verarbeiten von Daten nach einem Neustart eines Knotens, wobei das Verfahren umfasst:
Erfassen (s101), durch den Verarbeitungsknoten, eines Zeitpunkts von Altdaten mit einer aktuell längsten Caching-Zeit in der verteilten Nachrichtenwarteschlange, nachdem ein Neustart des Verarbeitungsknotens abgeschlossen ist;
Bestimmen (S102), durch den Verarbeitungsknoten, eines Wiederherstellungszyklus gemäß einem aktuellen Zeitpunkt und dem Zeitpunkt der Altdaten, wobei der Wiederherstellungszyklus bestimmt ist durch: Erfassen einer Zeitlänge von dem Zeitpunkt der Altdaten mit der aktuell längsten Caching-Zeit und dem aktuellen Zeitpunkt, und Generieren des Wiederherstellungszyklus mit einer mit der Zeitlänge übereinstimmenden Zeitlänge; und
Verarbeiten (S103), durch den Verarbeitungsknoten, der Altdaten und neu hinzugefügter Daten in der verteilten Nachrichtenwarteschlange innerhalb des Wiederherstellungszyklus.

2. Verfahren nach Anspruch 1, wobei das Verfahren auf ein Datenverarbeitungssystem angewendet wird, das die verteilte Nachrichtenwarteschlange und den Verarbeitungsknoten einschließt.

3. Verfahren nach Anspruch 2, wobei das Datenverarbeitungssystem weiter einen Speicherknoten einschließt.

4. Verfahren nach einem vorstehenden Anspruch, wobei das Datenverarbeitungssystem weiter einen Speicherknoten umfasst und das Verfahren vor dem Abschluss des Neustarts des Verarbeitungsknotens weiter umfasst:
Empfangen, durch den Verarbeitungsknoten, einer Anweisung zum Schließen einer Rechenaufgabe; und
Stoppen, durch den Verarbeitungsknoten, eines Empfangens von Daten von der verteilten Nachrichtenwarteschlange und Schreiben von aktuell in dem Verarbeitungsknoten gecachten Daten in den Speicherknoten bei einem Abschluss des Verarbeitens (S103) der Daten.

5. Verfahren nach einem vorstehenden Anspruch, wobei das Bestimmen (S102), durch den Verarbeitungsknoten, des Verarbeitungszyklus gemäß dem aktuellen Zeitpunkt und dem Zeitpunkt der Altdaten einschließt:
Erfassen einer Zeitlänge von dem den Altdaten mit der längsten Caching-Zeit entsprechenden Zeitpunkt zu dem aktuellen Zeitpunkt; und
Generieren des Wiederherstellungszyklus mit einer mit der Zeitlänge übereinstimmenden Zeitlänge.

6. Verfahren nach Anspruch 5, wobei die Zeitlänge des Wiederherstellungszyklus gleich wie die Zeitlänge von dem den Altdaten mit der längsten Caching-Zeit entsprechenden Zeitpunkt zu dem aktuellen Zeitpunkt ist.

7. Verfahren nach einem vorstehenden Anspruch, wobei das Verarbeiten (S103), durch den Verarbeitungsknoten, der Altdaten und der neu hinzugefügten Daten in der verteilten Nachrichtenwarteschlange innerhalb des Wiederherstellungszyklus einschließt:
Festlegen mehrerer Verarbeitungszeitperioden sequenziell gemäß einer Einheitszeitlänge des Wiederherstellungszyklus, und Zuordnen zu verarbeitender Daten zu jeder der Verarbeitungszeitperioden basierend auf den Altdaten und den neu hinzugefügten Daten; und
Verarbeiten der entsprechenden zu verarbeitenden Daten innerhalb jeder der Verarbeitungszeitperioden und Wiederherstellen der Rechenaufgabe zu normaler Verarbeitungslogik, nachdem der Wiederherstellungszyklus geendet hat.

8. Verfahren nach Anspruch 7, wobei sich die Verarbeitungszeitperiode der Reihe nach aus einer Datenverarbeitungszeit und einer Datensynchronisierungszeit zusammensetzt und das Verarbeiten der entsprechenden zu verarbeitenden Daten innerhalb jeder der Verarbeitungszeitperioden einschließt:
Verarbeiten der zu verarbeitenden Daten innerhalb der Datenverarbeitungszeit und Speichern der zu verarbeitenden Daten, die verarbeitet worden sind, nachdem die Datenverarbeitungszeit geendet hat; und
Verwerfen, innerhalb der Datensynchronisierungszeit, der zu verarbeitenden Daten, die nicht verarbeitet worden sind, wenn die zu verarbeitenden Daten, die nicht verarbeitet worden sind, bestehen, nachdem die Datenverarbeitungszeit geendet hat.

9. Datenverarbeitungsvorrichtung, die als ein Verarbeitungsknoten auf ein Datenverarbeitungssystem angewendet wird, das eine verteilte Nachrichtenwarteschlange und den Verarbeitungsknoten umfasst, wobei die Datenverarbeitungsvorrichtung umfasst:
ein Erfassungsmodul (410), das dazu konfiguriert ist, einen Zeitpunkt von Altdaten mit einer aktuell längsten Caching-Zeit in der verteilten Nachrichtenwarteschlange zu erfassen, nachdem ein Neustart abgeschlossen ist;
ein Bestimmungsmodul (420), das dazu konfiguriert ist, einen Wiederherstellungszyklus gemäß einem aktuellen Zeitpunkt und dem Zeitpunkt der Altdaten zu bestimmen, wobei der Wiederherstellungszyklus bestimmt wird durch: Erfassen einer Zeitlänge von dem Zeitpunkt der Altdaten mit der aktuell längsten Caching-Zeit und dem aktuellen Zeitpunkt und Generieren des Wiederherstellungszyklus mit einer mit der Zeitlänge übereinstimmenden Zeitlänge; und
ein Verarbeitungsmodul (430), das dazu konfiguriert ist, die Altdaten und neu hinzugefügte Daten in der verteilten Nachrichtenwarteschlange innerhalb des Wiederherstellungszyklus zu verarbeiten.

10. Datenverarbeitungsvorrichtung nach Anspruch 9, wobei das Datenverarbeitungssystem weiter einen Speicherknoten umfasst und die Datenverarbeitungsvorrichtung weiter umfasst:
ein Schließmodul, das dazu konfiguriert ist, eine Anweisung zum Schließen einer Rechenaufgabe zu empfangen, ein Empfangen von Daten von der verteilten Nachrichtenwarteschlange zu stoppen und aktuell in der Datenverarbeitungsvorrichtung gecachte Daten bei einem Abschluss des Verarbeitens der Daten in den Speicherknoten zu schreiben.

11. Datenverarbeitungsvorrichtung nach Anspruch 9 oder Anspruch 10, wobei das Bestimmungsmodul (420) weiter umfasst:
ein Erfassungsuntermodul, das dazu konfiguriert ist, eine Zeitlänge von dem den Altdaten mit der längsten Caching-Zeit entsprechenden Zeitpunkt zu dem aktuellen Zeitpunkt zu erfassen; und
ein Generierungsuntermodul, das dazu konfiguriert ist, den Wiederherstellungszyklus mit einer mit der Zeitlänge übereinstimmenden Zeitlänge zu erzeugen.

12. Datenverarbeitungsvorrichtung nach einem der Ansprüche 9 bis 11, wobei das Verarbeitungsmodul (430) weiter umfasst:
ein Festlegungsuntermodul, das dazu konfiguriert ist, mehrere Verarbeitungszeitperioden sequenziell gemäß einer Einheitszeitlänge des Wiederherstellungszyklus festzulegen und jeder der Verarbeitungszeitperioden basierend auf den Altdaten und den neu hinzugefügten Daten zu verarbeitende Daten zuzuordnen;
ein Verarbeitungsuntermodul, das dazu konfiguriert ist, die entsprechenden zu verarbeitenden Daten innerhalb jeder der Verarbeitungszeitperioden zu verarbeiten; und
ein Wiederherstellungsuntermodul, das dazu konfiguriert ist, die Rechenaufgabe zu normaler Verarbeitungslogik wiederherzustellen, nachdem der Wiederherstellungszyklus geendet hat.

13. Datenverarbeitungsvorrichtung nach Anspruch 12, wobei sich die Verarbeitungszeitperiode der Reihe nach aus einer Datenverarbeitungszeit und einer Datensynchronisierungszeit zusammensetzt und das Verarbeitungsuntermodul dazu konfiguriert ist:
die zu verarbeitenden Daten innerhalb der Datenverarbeitungszeit zu verarbeiten und die zu verarbeitenden Daten, die verarbeitet worden sind, zu speichern, nachdem die Datenverarbeitungszeit geendet hat; und
innerhalb der Datensynchronisierungszeit die zu verarbeitenden Daten, die nicht verarbeitet worden sind, zu verwerfen, wenn die zu verarbeitenden Daten, die nicht verarbeitet worden sind, existieren, nachdem die Datenverarbeitungszeit geendet hat.

14. Ein oder mehrere Speicher, die darauf computerlesbare Anweisungen speichern, die, wenn sie von einem oder mehreren Prozessoren ausgeführt werden, bewirken, dass der eine oder die mehreren Prozessoren Vorgänge durchführen, die umfassen:
Erfassen eines Zeitpunkts von Altdaten mit einer längsten Caching-Zeit in einer verteilten Nachrichtenwarteschlange, nachdem ein Neustart des Verarbeitungsknotens abgeschlossen ist;
Bestimmen eines Wiederherstellungszyklus gemäß einem aktuellen Zeitpunkt und dem Zeitpunkt der Altdaten, wobei der Wiederherstellungszyklus bestimmt wird durch: Erfassen einer Zeitlänge von dem Zeitpunkt der Altdaten mit der aktuell längsten Caching-Zeit und dem aktuellen Zeitpunkt und Generieren des Wiederherstellungszyklus mit einer mit der Zeitlänge übereinstimmenden Zeitlänge; und
Verarbeiten der Altdaten und neu hinzugefügter Daten in einer verteilten Nachrichtenwarteschlange innerhalb des Wiederherstellungszyklus.

15. Ein oder mehrere Speicher nach Anspruch 14, wobei die Vorgänge weiter umfassen:
Empfangen einer Anweisung zum Schließen einer Rechenaufgabe;
Stoppen eines Empfangens von Daten von der verteilten Nachrichtenwarteschlange; und
Schreiben von aktuell in dem Verarbeitungsknoten gecachten Daten in einen Speicherknoten bei einem Abschluss des Verarbeitens der Daten.

## Revendications

1. Procédé pour traiter des données après un redémarrage d'un nœud, le procédé comprenant:
l'acquisition (s101), par le nœud de traitement, d'un point temporel de données héritées actuellement avec un temps de mise en cache le plus long dans la file d'attente de messages distribués après qu'un redémarrage du nœud de traitement s'est achevé ;
la détermination (S102), par le nœud de traitement, d'un cycle de rétablissement selon un point temporel actuel et le point temporel des données héritées, dans lequel le cycle de rétablissement est déterminé par : l'acquisition d'une longueur temporelle à partir du point temporel de données héritées actuellement avec un temps de mise en cache le plus long et le point temporel actuel, et la production du cycle de rétablissement ayant une longueur temporelle compatible avec la longueur temporelle ; et
le traitement (S103), par le nœud de traitement, des données héritées et des données nouvellement ajoutées dans la file d'attente de messages distribués à l'intérieur du cycle de rétablissement.

2. Procédé selon la revendication 1, dans lequel le procédé est appliqué à un système de traitement de données qui inclut la file d'attente de messages distribués et le nœud de traitement.

3. Procédé selon la revendication 2, dans lequel le système de traitement de données inclut en outre un nœud de stockage.

4. Procédé selon l'une quelconque des revendications précédentes, dans lequel le système de traitement de données comprend en outre un nœud de stockage, et avant que le redémarrage du nœud de traitement n'ait été achevé, le procédé comprend en outre :
la réception, par le nœud de traitement, d'une instruction de fermer d'une tâche informatique ; et
l'arrêt, par le nœud de traitement, de la réception de données à partir de la file d'attente de messages distribués, et l'écriture de données actuellement mises en cache dans le nœud de traitement jusque dans le nœud de stockage lors de l'achèvement du traitement (S103) des données.

5. Procédé selon l'une quelconque des revendications précédentes, dans lequel la détermination (S102), par le nœud de traitement, du cycle de rétablissement selon le point temporel actuel et le point temporel des données héritées inclut :
l'acquisition d'une longueur temporelle allant du point temporel correspondant aux données héritées avec le temps de mise en cache le plus long jusqu'au point temporel actuel ; et
la production du cycle de rétablissement ayant une longueur temporelle compatible avec la longueur temporelle.

6. Procédé selon la revendication 5, dans lequel la longueur temporelle du cycle de rétablissement est identique à la longueur temporelle allant du point temporel correspondant aux données héritées avec le temps de mise en cache le plus long jusqu'au point temporel actuel.

7. Procédé selon l'une quelconque des revendications précédentes, dans lequel le traitement (S103), par le nœud de traitement, des données héritées et des données nouvellement ajoutées dans la file d'attente de messages distribués à l'intérieur du cycle de rétablissement inclut :
la fixation de périodes de temps de traitement multiples de façon séquentielle selon une longueur temporelle unitaire du cycle de rétablissement, et l'attribution de données à traiter à chacune des périodes de temps de traitement sur la base des données héritées et des données nouvellement ajoutées ; et
le traitement des données à traiter correspondantes à l'intérieur de chacune des périodes de temps de traitement, et le rétablissement de la tâche informatique à une logique de traitement normale après que le cycle de rétablissement se termine.

8. Procédé selon la revendication 7, dans lequel la période de temps de traitement est composée de temps de traitement de données et de temps de synchronisation de données en séquence, et le traitement des données à traiter correspondantes à l'intérieur de chacune des périodes de temps de traitement inclut :
le traitement des données à traiter à l'intérieur du temps de traitement de données, et le stockage des données à traiter qui ont été traitées après que le temps de traitement de données se termine ; et
le rejet, à l'intérieur du temps de synchronisation de données, des données à traiter qui n'ont pas été traitées si les données à traiter qui n'ont pas été traitées existent après que le temps de traitement de données se termine.

9. Dispositif de traitement de données, appliqué comme un nœud de traitement à un système de traitement de données qui comprend une file d'attente de messages distribués et le nœud de traitement, le dispositif de traitement de données comprenant :
un module d'acquisition (410) configuré pour acquérir un point temporel de données héritées actuellement avec un temps de mise en cache le plus long dans la file d'attente de messages distribués après qu'un redémarrage s'est achevé ;
un module de détermination (420) configuré pour déterminer un cycle de rétablissement selon un point temporel actuel et le point temporel des données héritées, dans lequel le cycle de rétablissement est déterminé par : l'acquisition d'une longueur temporelle à partir du point temporel de données héritées actuellement avec un temps de cache le plus long et le point temporel actuel, et la production du cycle de rétablissement ayant une longueur temporelle compatible avec la longueur temporelle ; et
un module de traitement (430) configuré pour traiter les données héritées et des données nouvellement ajoutées dans la file d'attente de messages distribués à l'intérieur du cycle de rétablissement.

10. Dispositif de traitement de données selon la revendication 9, dans lequel le système de traitement de données comprend en outre un nœud de stockage, et le dispositif de traitement de données comprend en outre :
un module de fermeture configuré pour recevoir une instruction de fermeture d'une tâche informatique, arrêter de recevoir des données à partir de la file d'attente de messages distribués, et écrire des données actuellement mises en cache dans le dispositif de traitement de données jusque dans le nœud de stockage lors de l'achèvement du traitement des données.

11. Dispositif de traitement de données selon la revendication 9 ou la revendication 10, dans lequel le module de détermination (420) comprend en outre :
un sous-module d'acquisition configuré pour acquérir une longueur temporelle allant du point temporel correspondant aux données héritées avec le temps de mise en cache le plus long jusqu'au point temporel actuel ; et
un sous-module de production configuré pour produire le cycle de rétablissement ayant une longueur temporelle compatible avec la longueur temporelle.

12. Dispositif de traitement de données selon l'une quelconque des revendications 9 à 11, dans lequel le module de traitement (430) comprend en outre :
un sous-module de fixation configuré pour fixer des périodes de temps de traitement multiples de façon séquentielle selon une longueur temporelle unitaire du cycle de rétablissement, et attribuer des données à traiter à chacune des périodes de temps de traitement sur la base des données héritées et des données nouvellement ajoutées ;
un sous-module de traitement configuré pour traiter les données à traiter correspondantes à l'intérieur de chacune des périodes de temps de traitement ; et
un sous-module de rétablissement configuré pour rétablir la tâche informatique à une logique de traitement normale après que le cycle de rétablissement se termine.

13. Dispositif de traitement de données selon la revendication 12, dans lequel la période de temps de traitement est composée de temps de traitement de données et de temps de synchronisation de données en séquence, et le sous-module de traitement est configuré pour :
traiter les données à traiter à l'intérieur du temps de traitement de données, et stocker les données à traiter qui ont été traitées après que le temps de traitement de données se termine ; et
rejeter, à l'intérieur du temps de synchronisation de données, les données à traiter qui n'ont pas été traitées si les données à traiter qui n'ont pas été traitées existent après que le temps de traitement de données se termine.

14. Une ou plusieurs mémoires stockant en leur sein des instructions lisibles par ordinateur qui, lorsqu'elles sont exécutées par un ou plusieurs processeurs, amènent le ou les plusieurs processeurs à effectuer des actes comprenant :
l'acquisition d'un point temporel de données héritées avec un temps de mise en cache le plus long dans une file d'attente de messages distribués après qu'un redémarrage du nœud de traitement a été achevé ;
la détermination d'un cycle de rétablissement selon un point temporel actuel et le point temporel des données héritées, dans lequel le cycle de rétablissement est déterminé par : l'acquisition d'une longueur temporelle allant du point temporel de données héritées actuellement avec le temps de mise en cache le plus long et le point temporel actuel, et la production du cycle de rétablissement ayant une longueur temporelle compatible avec la longueur temporelle ; et
le traitement des données héritées et des données nouvellement ajoutées dans une file d'attente de messages distribués à l'intérieur du cycle de rétablissement.

15. Une ou plusieurs mémoires selon la revendication 14, dans lesquelles les actes comprennent en outre :
la réception d'une instruction de fermeture d'une tâche informatique ;
l'arrêt de la réception de données en provenance de la file d'attente de messages distribués ; et
l'écriture de données actuellement mises en cache dans le nœud de traitement jusque dans un nœud de stockage lors de l'achèvement du traitement des données.
